# EUROPEAN PATENT SPECIFICATION

(11) **EP 3 254 842 B1**
(45) Date of publication and mention of the grant of the patent: **28.09.2022**
(21) Application number: 16290104.5
(22) Date of filing: 08.06.2016
(51) Int. Cl.: B32B 5/02, B32B 5/26, A41C 3/00, A41C 3/14

(54) **NATURAL FIBER MOLDED GARMENT**
AUS NATURFASER GEFORMTES KLEIDUNGSSTÜCK
VÊTEMENT MOULÉ EN FIBRES NATURELLES

(43) Date of publication of application: 13.12.2017
(73) Proprietor: Hanes Operations Europe SAS, 92500 Rueil-Malmaison (FR)
(72) Inventor: Turlan-Van Der Hoeven, Manon, 71710 Marmagne (FR)
(74) Representative: Fish & Richardson P.C.

(56) References cited:
- WO-A1-2015/173524
- CN-A- 103 132 330
- FR-A1- 2 850 536
- FR-A3- 2 851 126
- US-A1- 2010 297 914

## Description

### TECHNICAL FIELD

The present invention relates to a garment including a molded fabric laminate, the molded fabric laminate having a cured shape memory elastomer that adheres textile layers together, each textile layer including at least 80% natural fiber.

### BACKGROUND

It is generally understood that garments made of natural fibers are more comfortable than garments made of synthetic fibers. In addition, garments with fewer seams and elastic bands are typically preferred. Synthetic fabrics such as nylon and polyester have been molded to yield garments. The process typically requires molding at a temperature around 200°C for 25-35 seconds or longer. Forming molded garments out of natural fibers, however, presents challenges related to binding of the natural fibers with adhesives, yellowing during molding, shrinkage during molding and washing, low resistance to nitrogen oxides, and the like.

FR2 851 126 A3 discloses a bra cup including a rubber inner layer with openings and projections to form texture that is covered by cotton outer layers.

WO 2015/173524 A1 discloses a method of manufacturing an undergarment having two superposed textiles.

CN 103132330A discloses a textile having a shape memory interpenetrating polymer network comprising a textile fabric itself on which a shape memory interpenetrating polymer network is formed.

### SUMMARY

The present invention is defined by the claims. Garments including molded fabric laminates and methods of making the molded fabric laminates are described. The garments advantageously have a high percentage of natural fibers, low shrinkage after molding and washing, high resistance to nitrogen oxides, low yellowing during the molding process. The garments also advantageously have clean cut edges that resist fraying after multiple washings.

In a first general aspect, a garment includes a molded fabric laminate. The molded fabric laminate includes a first fabric layer including at least 80% natural fibers, a second fabric layer including at least 80% natural fibers, and a patterned layer of cured shape memory elastomer molded between the first and second fabric layers. The patterned layer of the cured shape memory elastomer is a continuous layer of the cured shape memory elastomer defining a multiplicity of openings per square centimeter of the patterned layer, where the openings are free of the cured shape memory elastomer.

In a second general aspect, making a molded fabric laminate includes disposing a patterned layer of an uncured shape memory elastomer on a first fabric layer and contacting the patterned layer of the uncured shape memory elastomer with a second fabric layer to yield a fabric sub-assembly. The first and second fabric layers include at least 80% natural fibers. The patterned layer of the uncured shape memory elastomer is a continuous layer of the uncured shape memory elastomer defining a multiplicity of openings per square centimeter of the patterned layer, where the openings are free of the uncured shape memory elastomer. The fabric sub-assembly is contacted with a surface of a heated mold. The fabric sub-assembly is molded to conform to the shape of the mold, thereby curing the uncured shape memory elastomer to yield a molded fabric laminate including a patterned layer of cured shape memory elastomer between the first fabric layer and the second fabric layer and adhering the first fabric layer to the second fabric layer.

Implementations of the first and second general aspects may include one or more of the following features.

Each square centimeter of the patterned layer defines at least 24 or at least 48 openings. A majority of the openings define geometric shapes, such as circles, rectangles, arcs, and the like. When the openings are circles, a diameter of the majority of the openings may be less than 1.5 mm, less than 1 mm, at least 0.2 mm, at least 0.4 mm, at least 0.6 mm, or a combination thereof. The multiplicity of the openings define less than 50% of the surface area of the patterned layer. In certain cases, the cured shape memory elastomer covers at least 50% of the surface area of the patterned layer. The cured shape memory elastomer may include a cured silicone rubber (e.g., a cured liquid silicone rubber), such as a bicomponent liquid silicone rubber.

At least one of the first fabric layer and the second fabric layer may be a knit fabric. The first fabric layer, the second fabric layer, or both may include at least 80% cotton, up to 20% spandex, or a combination thereof. The first fabric layer and the second fabric layer may be white, such as optical white.

The garment may shrink less than 5%, less than 4%, or less than 3% from before molding to after 5 washings. In some cases, the garment is a one-piece garment or a seamless garment. In one example, the garment is a bra (e.g., a one-piece bra). Edges of the garment may be clean cut. In certain cases, the clean cut edges are scalloped. The edges of the garment typically resist fraying, such that the edges of the garment are not frayed after a number of wash cycles (e.g., 20 wash cycles). The nitrogen oxide resistance of the garment after 3 cycles of exposure to nitrogen oxides is typically at least 1 (e.g., at least ¾) on a scale of 1 to 5.

The mold may be heated to a temperature between 160°C and 220°C (e.g., up to 185°C). In some cases, the molded fabric laminate is trimmed to yield a garment or a portion of a garment.

Thus, particular embodiments have been described. The details of one or more implementations and various features and aspects are set forth in the accompanying drawings, the description, and the claims below.

### BRIEF DESCRIPTION OF THE DRAWINGS

FIG. 1 is a flowchart showing exemplary operations for forming a molded garment or a portion of a molded garment.
FIG. 2 depicts an example of screen printing an uncured shape memory elastomer on a first fabric layer.
FIGS. 3A-3F depict exemplary patterns of shape memory elastomer on a first fabric layer.
FIG. 4 depicts an exemplary uncured shape memory elastomer screen printed on a first fabric layer.
FIG. 5 depicts an exploded view of an exemplary fabric sub-assembly, with uncured shape memory elastomer printed on a first fabric layer.
FIG. 6 depicts an exemplary mold assembly for forming a molded fabric laminate.
FIG. 7 depicts an exemplary mold for forming a molded garment.
FIG. 8 depicts an exemplary molded garment.

### DETAILED DESCRIPTION

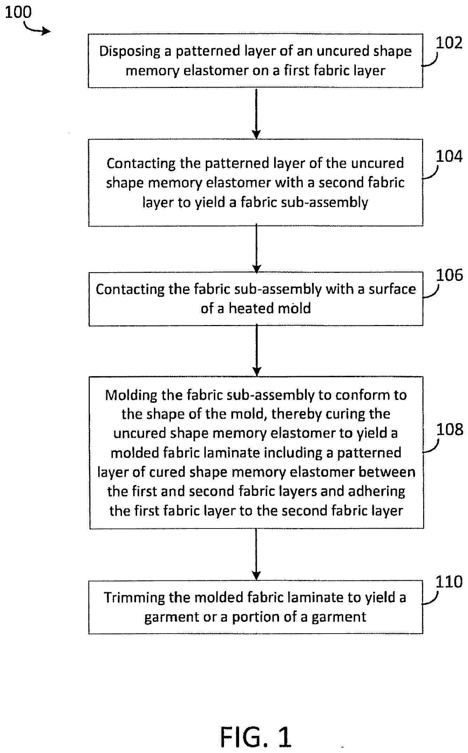

FIG. 1 is a flowchart showing operations in an exemplary process 100 for forming a molded garment or a portion of a molded garment. The garment may be an undergarment (e.g., bra, underwear) or other garment, such as socks. A garment formed in process 100 may be a seamless garment, a one-piece garment, or a seamless, one-piece garment. In one example, a seamless, one-piece bra may be formed by process 100. A portion of a molded garment formed in process 100 may be attached to one or more other pieces of fabric or fabric laminate to yield a complete garment. In one example, cups for a bra may be formed via process 100 and then attached to other portions (e.g., side panels and straps) formed in a separate process. In another example, straps are attached to a one-piece bra body formed via process 100.

In 102, a patterned layer of an uncured shape memory elastomer is disposed on a first fabric layer. The first fabric layer includes at least 80% natural fibers (e.g., cotton, flax, jute, and the like) and up to 20% other fibers (e.g., elastic materials such as spandex or elastane and the like). The first fabric is typically a knit fabric. In some cases, the first fabric layer may have an interlock construction (e.g., 40-50 gauge interlock) with ultra-thin long yarns to allow clean cut edges. In one example, the first fabric layer is an extensible knitted fabric formed by alternating sets of needles on a circular knitting machine. The first fabric layer may be a double face knitted fabric (e.g., jersey, or part jersey, such as a jersey in the front, a rib 1/1 on the other face, thicker and heavier than the jersey, with an elongation in the width). Thickness of the yarn used to form the first fabric layer may be in a range of 4 µm to 8 µm (e.g., about 6 µm), The weight per square meter of the first fabric layer may be in a range between 160 g/m² and 300 g/m². In one example, the first fabric layer includes 80% cotton and 20% spandex and has a weight per square meter of 180 g/m², 200 g/m², or 260 g/m². The first fabric layer may be any color, including white (e.g., optical white).

The uncured shape memory elastomer is typically an uncured liquid silicone rubber (e.g., paste-like and easily pigmentable, with a short curing time). The uncured liquid silicone rubber may be a bicomponent liquid silicone rubber, such as ELASTOSIL LR 3003/30 A/B (available from Wacker Chemie AG, Germany).

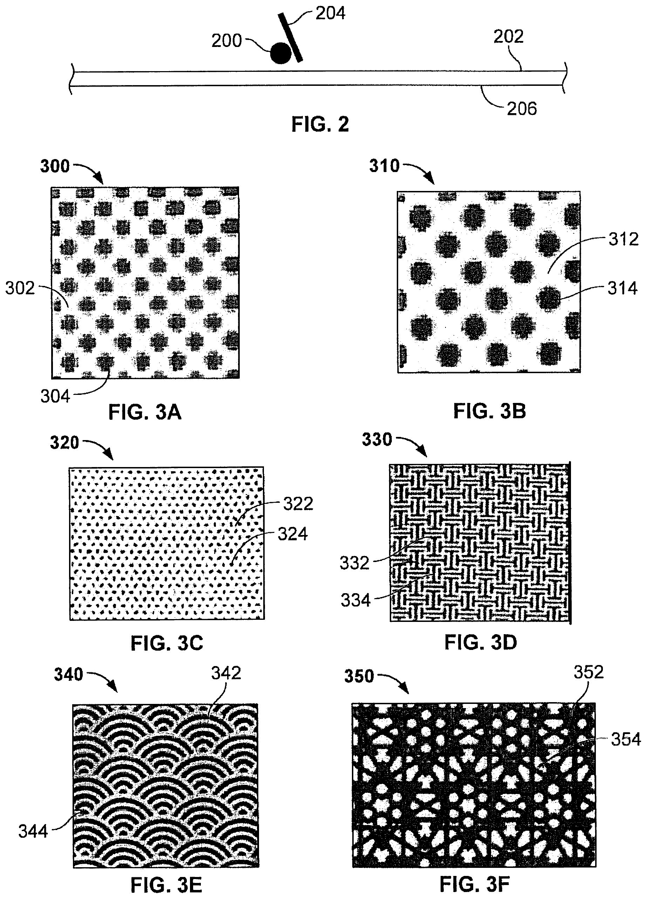

The uncured shape memory elastomer is typically disposed on the first fabric layer in a printing process (e.g., a screen printing process). FIG. 2 depicts a screen printing process in which uncured shape memory elastomer 200 is applied to screen 202 with blade 204. Screen 202 includes a canvas and an emulsion. In one example, screen 202 is formed of a canvas of 21-160 (21 yarns/cm in poly(ether sulfone)) of 160 µm (330 µm between fibers), tight at 20 N. Emulsion is applied to the canvas by methods generally known in the art to prevent the uncured shape memory elastomer from reaching portions of first fabric layer 206. A thickness of the emulsion and canvas is in a range between 400 µm and 500 µm (e.g., between 420 µm and 480 µm, between 440 µm and 460 µm, or about 450 µm). A thicker layer of emulsion results in a thicker layer of uncured shape memory material disposed on the first fabric layer. If the layer of emulsion is too thick (e.g., 575 µm for emulsion and canvas), the resulting fabric laminate will have a plastic feel. If the layer of emulsion is too thin, it may be absorbed by the first fabric layer, particularly if the textile layer comprises a hydrophilic component such as cotton, resulting in poor adhesion of the fabric layers.

During the screen printing process, blade 204 moves uncured shape memory elastomer 200 along screen 202 to fill open mesh apertures in the screen with uncured shape memory elastomer. The screen contacts first fabric layer 206 momentarily, allowing the uncured shape memory elastomer to wet the first fabric layer and be pulled out of the mesh apertures as the screen springs back after the blade has passed. The uncured shape memory elastomer forms a patterned layer of the uncured shape memory elastomer on first fabric layer 206.

The patterned layer of the uncured shape memory elastomer is a continuous layer of the uncured shape memory elastomer defining a multiplicity of openings per square centimeter of the patterned layer, where the openings are free of the uncured shape memory elastomer. As used herein, a "continuous layer" of the uncured shape memory elastomer generally refers to a layer in which all of the uncured shape memory elastomer is connected (e.g., in a web) such that there are no isolated portions (e.g., no "islands") of the uncured shape memory elastomer. The patterned layer may be referred to as having an "airy" pattern, in which areas of first fabric layer 206 are free of the uncured shape memory elastomer, and the uncured shape memory elastomer forms a closed mesh. The multiplicity of openings define 50% or less of the surface area of the patterned layer (i.e., the uncured shape memory elastomer covers at least 50% of the surface area of the portion of the first fabric layer on which it is printed). A dense pattern of uncured shape memory elastomer yields a clean, even look after molding. Each square centimeter of the patterned layer may define at least 24 openings or at least 48 openings. Patterns with large openings (e.g., a thin net pattern) typically result in a "waffle" effect on the exterior of the molded portion of the garment, especially after washing, caused by shrinkage of portions of the fabric layers not in contact with the shape memory elastomer.

Openings in the uncured shape memory elastomer may define geometric shapes (e.g., circles, rectangles, triangles, arcs, and the like). In one example, the openings define circles. The circles may have a diameter of less than 1.5 mm (e.g., less than 1 mm). In some cases, the circles have a diameter of at least 0.2 mm, at least 0.4 mm, or at least 0.6 mm. FIGS. 3A-3F depict examples of patterned layers of the uncured shape memory elastomer. Each exemplary patterned layer includes a continuous layer of cured shape memory elastomer defining a multiplicity of openings per square centimeter of the patterned layer, where the openings are free of uncured shape memory elastomer. In FIGS. 3A-3E, the uncured shape memory elastomer is depicted as a white network, and black areas are free of shape memory elastomer. In FIG. 3F, the uncured shape memory elastomer is depicted as a black network, and the white areas are free of shape memory elastomer.

In FIG. 3A, patterned layer 300 is a "negative polka dot" pattern, with uncured shape memory elastomer 302 surrounding circular openings 304. Circular openings 304 are free of the uncured shape memory elastomer. Patterned layer 300 defines about 55 circular openings (diameter about 0.8 mm) in an area of 1 cm². In FIG. 3B, patterned layer 310 is also a "negative polka dot" pattern, with uncured shape memory elastomer 312 surrounding circular openings 314. Circular openings 314 are free of the uncured shape memory elastomer. Patterned layer 310 defines about 24 circular openings (diameter about 1.2 mm) in an area of 1 cm². In FIG. 3C, patterned layer 320 includes uncured shape memory elastomer 322 surrounding geometric openings 324. Geometric openings 324 are free of the uncured shape memory elastomer. In FIG. 3D, patterned layer 330 includes uncured shape memory elastomer 332 surrounding "I" shaped openings 334. "I" shaped openings 334 are free of the uncured shape memory elastomer. In FIG. 3E, patterned layer 340 includes uncured shape memory elastomer 342 in a repeating arc pattern surrounding arc-shaped openings 344. Arc-shaped openings 344 are free of the uncured shape memory elastomer. In FIG. 3F, patterned layer 350 includes uncured shape memory elastomer 352 in a geometric pattern surrounding openings 354 of various shapes. Openings 354 are free of the uncured shape memory elastomer.

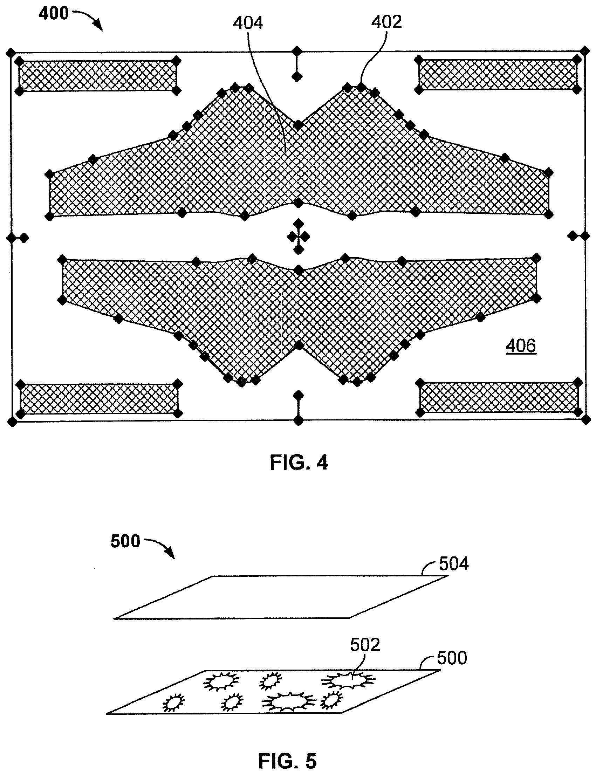

FIG. 4 depicts an exemplary first fabric layer 400 with outlines 402 indicating the area over which uncured shape memory elastomer has been printed to yield patterned layer 404 in the shape of a garment. Areas 406 outside outlines 402 are free of uncured shape memory elastomer.

Referring to FIG. 1, 104 includes contacting the patterned layer of the uncured shape memory elastomer with a second fabric layer to yield a fabric sub-assembly. The second fabric layer includes at least 80% natural fibers (e.g., cotton, flax, jute, and the like) and up to 20% other fibers (e.g., elastic materials such as spandex or elastane and the like). Other details described with respect to the first fabric layer also apply to the second fabric layer. The second fabric layer may be the same as the first fabric layer, or different.

FIG. 5 depicts an exploded view of an exemplary fabric sub-assembly 500, including first fabric layer 500 with patterned layers 502 of uncured shape memory elastomer printed in the shape of garments or portions of garments, and second fabric layer 504. When the garment being formed is a bra, the second fabric layer may have previously received a wire casing with wires inside and a stabilizer as a center front between the wires or other parts that are meant to be in between the first and second fabric layers to make the garment functional.

Referring again to FIG. 1, 106 includes contacting the fabric sub-assembly with a surface of a heated mold. The mold may be heated to a temperature in a range between 160°C and 220°C. In 108, the fabric sub-assembly is molded to conform to the shape of the mold, thereby curing the uncured shape memory elastomer to yield a molded fabric laminate including a patterned layer of cured shape memory elastomer between the first and second fabric layers and adhering the first fabric layer to the second fabric layer. Molding is typically achieved in 30 seconds at a temperature up to 185°C (e.g., up to 180°C). During molding, the uncured shape memory elastomer is cured to yield a cured shape memory elastomer. The pattern of the uncured shape memory elastomer is retained. Curing the shape memory elastomer also adheres the first and second fabric layers together. To avoid yellowing during molding, non-natural fibers; if present, are selected to have a low heat-setting temperature. In one example, up to 20% Easy Set LYCRA is used to reduce heat-setting temperature, dwell time, or both for fabrics containing heat sensitive fibers such as cotton, to provide excellent molding characteristics, and to preserve the soft feel or natural fibers.

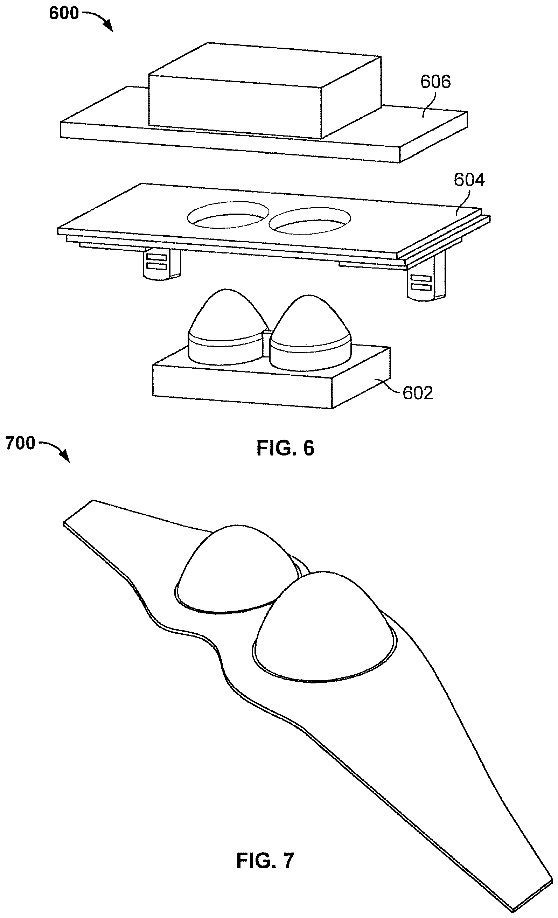

FIG. 6 depicts exemplary mold assembly 600, including cup molds 602 and hot plate 604, proximate oven 606. Mold assembly 600 may be used to mold cups for a bra (i.e., a portion of a garment) in a process in which a portion of a fabric sub-assembly is appropriately sized (e.g., trimmed) and placed on cup molds 602. Molded cups are formed from the fabric sub-assembly after hot plate 604 engages cup molds 602. Contact of the hot plates 604 (e.g., 180°C) with a fabric sub-assembly has a duration of approximately 30 sec, after which the hot plate is disengaged from cup molds 602. FIG. 7 depicts mold 700, a three-dimensional anatomic mold for molding a fabric sub-assembly into a seamless, one-piece bra.

Returning again to FIG. 1, in 110, the molded fabric laminate is trimmed to yield a garment or a portion of a garment. Trimming the molded fabric laminate may include cutting the edges of the molded fabric laminate with any cutting system (e.g., a mechanical cutting system or an ultrasonic cutting system.) Trimming as described herein yields clean edges that resist fraying, even after multiple washes. In some cases, trimming may include forming scalloped edges on the garment or portion of the garment. In certain cases, a narrow hem may be formed on an edge of the garment or portion of the garment after trimming.

When the first and second fabric layers include at least 80% cotton, the garment or portion of the garment is breathable and has a soft cotton hand feel. Shrinkage of the garment or the portion of the garment after molding and 20 wash cycles is less than 5%, less than 4%, or less than 3%, resulting in a stabilized shape and little or no fraying of the clean cut edges, even after many washes. Resistance to nitrogen oxides after three cycles of exposure to nitrogen oxides is ≥ ¾.

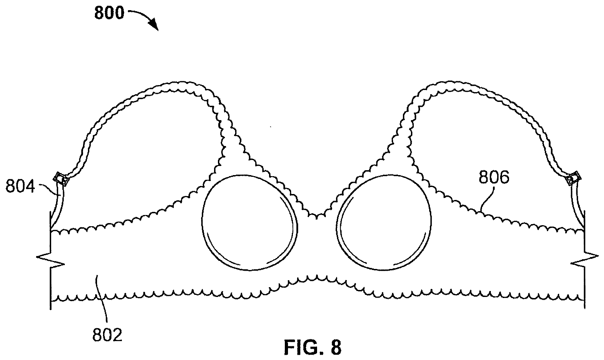

FIG. 8 depicts garment 800 formed according to process 100. Garment 800 includes molded bra body 802 with attached straps 804. Edges 806 are scalloped.

Color fastness to nitrogen oxides is tested under method ISO 105-G01: 1985. The aim is to determine color fastness of textiles to nitrogen oxides produced with gas combustion or gasoline. In the tests, specimens are exposed to nitrogen oxide in a closed container until the coloring of control fabric indicates color staining. Color variation is evaluated with the grey scale by comparison with the control fabric. Variation is evaluated by 1/2 shade. A value of 1 indicates high variation/bad behavior to nitrogen oxides, and a value of 5 indicates no variation or reaction to the nitrogen oxides. Test pieces are rated with a value of 1, 1/2, 2, 2/3, 3, 3/4, 4, 4/5, or 5. For white and light shades, a value of 3/4 is targeted. For the garment described herein, resistance to nitrogen oxides after three cycles of exposure to nitrogen oxides (comparable to pollution in big cities, its suburbs, and next to highways) is ≥ 3/4 on the scale of 1 to 5.

A garment such as a bra formed according to process 100 can have a stabilized cup shape, even after 20 washes. Shrinkage of the garment formed according to process 100, measured by drawing a line (e.g., 17 cm long) across a curved portion of the cup and measuring the length of the line before molding and after 20 washes, can be less than 4%.

Although described in a particular order, the operations described above with respect to process 100 may be performed in a different order. Additionally, one or more of the operations may be omitted, or additional operations may be added.

## Claims

1. A garment comprising a molded fabric laminate, the molded fabric laminate comprising:
a first fabric layer (500) comprising at least 80% natural fibers;
a second fabric layer (504) comprising at least 80% natural fibers; and
a patterned layer of cured shape memory elastomer (502) molded between the first and second fabric layers, wherein the patterned layer of the cured shape memory elastomer is a continuous layer of the cured shape memory elastomer defining at least 24 openings (304, 314, 324, 334, 344, 354) per square centimeter of the patterned layer, wherein the openings are free of the cured shape memory elastomer, and wherein the openings define less than 50% of the surface area of the patterned layer.

2. The garment of claim 1, wherein each square centimeter of the patterned layer defines at least 48 openings.

3. The garment of claim 1, wherein a majority of the openings define geometric shapes, for example, wherein the majority of the openings define one of circles, rectangles or arcs.

4. The garment of claim 3, wherein the majority of the openings define circles and wherein a diameter of the majority of the openings is less than 1.5 mm or less than 1 mm, and optionally wherein the diameter of the majority of the openings is at least 0.2 mm, at least 0.4 mm, or at least 0.6 mm.

5. The garment of claim 1, wherein one of a) and b), wherein:
a) the cured shape memory elastomer comprises at least 50% of the surface area of the patterned layer; and
b) the cured shape memory elastomer comprises a cured silicone rubber.

6. The garment of claim 1, wherein one of a) and b); wherein:
a) the first fabric layer and the second fabric layer each comprises at least 80% cotton; and
b) wherein the first fabric layer and the second fabric layer each comprises up to 20% spandex.

7. The garment of claim 1, wherein the garment shrinks less than 5%, less than 4%, or less than 3% from before molding to after 5 washings.

8. The garment of claim 1, wherein the garment is one of:
a one-piece garment,
a seamless garment,
a bra, or
a one-piece bra.

9. The garment of claim 1, wherein the first fabric layer and the second fabric layer are knit fabrics.

10. The garment of claim 1, wherein edges of the garment are clean cut, and optionally one of a) and b), wherein:
a) edges of the garment are scalloped, and
b) the edges of the garment are not frayed after 20 wash cycles.

11. The garment of claim 1, wherein the nitrogen oxide resistance of the garment as tested under method ISO 105-G01: 1985 after 3 cycles of exposure to nitrogen oxides is ≥ 3/4.

12. The garment of claim 1, wherein the cured shape memory elastomer is a cured liquid silicone rubber that is optionally formed from a bicomponent liquid silicone rubber.

13. A method of making a molded fabric laminate, the method comprising:
disposing a patterned layer of an uncured shape memory elastomer on a first fabric layer (102), wherein the patterned layer of the uncured shape memory elastomer is a continuous layer of the uncured shape memory elastomer defining at least 24 openings per square centimeter of the patterned layer, wherein the openings are free of the uncured shape memory elastomer, and wherein the openings define less than 50% of the surface area of the patterned layer;
contacting the patterned layer of the uncured shape memory elastomer with a second fabric layer to yield a fabric sub-assembly (104);
contacting the fabric sub-assembly with a surface of a heated mold (106); and
molding the fabric sub-assembly to conform to the shape of the mold, thereby curing the uncured shape memory elastomer to yield a molded fabric laminate comprising a patterned layer of cured shape memory elastomer between the first fabric layer and the second fabric layer and adhering the first fabric layer to the second fabric layer (108), wherein the first and second fabric layers comprise at least 80% natural fibers.

14. The method of claim 13, wherein the mold is heated to a temperature between 160°C and 200°C, for example, wherein the mold is heated to a temperature up to 185°C.

15. The method of claim 13, comprising trimming the molded fabric laminate to yield a garment or a portion of a garment (110), and optionally wherein the garment or the portion of the garment has finished edges, for example, wherein the finished edges are either:
a) straight, scalloped, or a combination thereof, or
b) resist raveling.

## Patentansprüche

1. Kleidungsstück, umfassend ein geformtes Textillaminat, wobei das geformte Textillaminat umfasst:
eine erste Textilschicht (500), umfassend mindestens 80 % Naturfasern;
eine zweite Textilschicht (504), umfassend mindestens 80 % Naturfasern; und
eine strukturierte Schicht aus gehärtetem Formgedächtniselastomer (502), die zwischen den ersten und zweiten Textilschichten geformt ist, wobei die strukturierte Schicht des gehärteten Formgedächtniselastomers eine Endlosschicht des gehärtete Formgedächtniselastomers ist, die mindestens 24 Öffnungen (304, 314, 324, 334, 344, 354) pro Quadratzentimeter der strukturierten Schicht definiert, wobei die Öffnungen frei von dem gehärteten Formgedächtniselastomer sind, und wobei die Öffnungen weniger als 50 % des Flächeninhalts der strukturierten Schicht definieren.

2. Kleidungsstück nach Anspruch 1, wobei jeder Quadratzentimeter der strukturierten Schicht mindestens 48 Öffnungen definiert.

3. Kleidungsstück nach Anspruch 1, wobei eine Mehrheit der Öffnungen geometrische Formen definiert, wobei die Mehrheit der Öffnungen beispielsweise eines von Kreisen, Rechtecken oder Bögen definiert.

4. Kleidungsstück nach Anspruch 3, wobei die Mehrheit der Öffnungen Kreise definiert, und wobei ein Durchmesser der Mehrheit der Öffnungen weniger als 1,5 mm oder weniger als 1 mm beträgt, und wobei der Durchmesser der Mehrheit der Öffnungen gegebenenfalls mindestens 0,2 mm, mindestens 0,4 mm oder mindestens 0,6 mm beträgt.

5. Kleidungsstück nach Anspruch 1, wobei eines von a) und b) zutrifft, wobei:
a) das gehärtete Formgedächtniselastomer mindestens 50 % des Flächeninhalts der strukturierten Schicht umfasst; und
b) das gehärtete Formgedächtniselastomer einen gehärteten Silikonkautschuk umfasst.

6. Kleidungsstück nach Anspruch 1, wobei eines von a) und b) zutrifft, wobei:
a) die erste Textilschicht und die zweite Textilschicht jeweils mindestens 80 % Baumwolle umfassen; und
b) die erste Textilschicht und die zweite Textilschicht jeweils bis zu 20 % Spandex umfassen.

7. Kleidungsstück nach Anspruch 1, wobei das Kleidungsstück von vor der Formung bis nach 5 Wäschen weniger als 5 %, weniger als 4 % oder weniger als 3 % schrumpft.

8. Kleidungsstück nach Anspruch 1, wobei das Kleidungsstück eines der folgenden ist:
ein einteiliges Kleidungsstück,
ein nahtloses Kleidungsstück,
ein Büstenhalter oder
ein einteiliger Büstenhalter.

9. Kleidungsstück nach Anspruch 1, wobei die erste Textilschicht und die zweite Textilschicht Strickmaterialien sind.

10. Kleidungsstück nach Anspruch 1, wobei die Ränder des Kleidungsstücks glatt geschnitten sind, und gegebenenfalls eines von a) und b), wobei:
a) Ränder des Kleidungsstücks Muschelsäume aufweisen, und
b) die Ränder des Kleidungsstücks nach 20 Waschzyklen nicht ausgefranst sind.

11. Kleidungsstück nach Anspruch 1, wobei die Beständigkeit des Kleidungsstücks gegen Stickoxide, getestet gemäß der Methode ISO 105-G01: 1985, nach 3 Zyklen der Exposition gegenüber Stickoxiden ≥3/4 beträgt.

12. Kleidungsstück nach Anspruch 1, wobei das gehärtete Formgedächtniselastomer ein gehärteter flüssiger Silikonkautschuk ist, der gegebenenfalls aus einem flüssigen Zweikomponentensilikonkautschuk gebildet ist.

13. Verfahren zum Fertigen eines geformten Textillaminats, wobei das Verfahren umfasst:
Anordnen einer strukturierten Schicht aus einem ungehärteten Formgedächtniselastomer auf einer ersten Textilschicht (102), wobei die strukturierte Schicht des ungehärteten Formgedächtniselastomers eine Endlosschicht des ungehärteten Formgedächtniselastomers ist, die mindestens 24 Öffnungen pro Quadratzentimeter der strukturierten Schicht definiert, wobei die Öffnungen frei von dem ungehärteten Formgedächtniselastomer sind, und wobei die Öffnungen weniger als 50 % des Flächeninhalts der strukturierten Schicht definieren;
Kontaktieren der strukturierten Schicht des ungehärteten Formgedächtniselastomers mit einer zweiten Textilschicht, um ein Textilhalbfabrikat (104) zu ergeben;
Kontaktieren des Textilhalbfabrikats mit einer Oberfläche eines erwärmten Formwerkzeugs (106); und
Formen des Textilhalbfabrikats, so dass es der Form des Formwerkzeugs entspricht, wodurch das ungehärtete Formgedächtniselastomer gehärtet wird, um ein geformtes Textillaminat zu ergeben, das eine strukturierte Schicht aus gehärtetem Formgedächtniselastomer zwischen der ersten Textilschicht und der zweiten Textilschicht umfasst, und Haften der ersten Textilschicht an die zweite Textilschicht (108), wobei die ersten und zweiten Textilschichten mindestens 80 % Naturfasern umfassen.

14. Verfahren nach Anspruch 13, wobei das Formwerkzeug auf eine Temperatur zwischen 160 °C und 200 °C erwärmt wird, wobei beispielsweise das Formwerkzeug auf eine Temperatur bis zu 185 °C erwärmt wird.

15. Verfahren nach Anspruch 13, umfassend Zurechtschneiden des geformten Textillaminats, um ein Kleidungsstück oder einen Anteil eines Kleidungsstücks (110) zu ergeben, und wobei das Kleidungsstück oder der Anteil des Kleidungsstücks gegebenenfalls versäuberte Ränder hat, wobei die versäuberten Ränder beispielsweise entweder:
a) gerade, mit Muschelsaum oder eine Kombination davon sind, oder
b) ausfaserbeständig sind.

## Revendications

1. Vêtement comprenant un stratifié de tissu moulé, le stratifié de tissu moulé comprenant :
une première couche de tissu (500) comprenant au moins 80 % de fibres naturelles ;
une deuxième couche de tissu (504) comprenant au moins 80 % de fibres naturelles ; et
une couche à motifs d'élastomère à mémoire de forme durci (502) moulée entre la première et la deuxième couche de tissu, la couche à motifs de l'élastomère à mémoire de forme durci étant une couche continue de l'élastomère à mémoire de forme durci définissant au moins 24 ouvertures (304, 314, 324, 334, 344, 354) par centimètre carré de la couche à motifs, les ouvertures étant dépourvues de l'élastomère à mémoire de forme durci, et les ouvertures définissant moins de 50 % de la superficie de la couche à motifs.

2. Vêtement de la revendication 1, dans lequel chaque centimètre carré de la couche à motifs définit au moins 48 ouvertures.

3. Vêtement de la revendication 1, dans lequel une majorité des ouvertures définissent des formes géométriques, par exemple dans lequel la majorité des ouvertures définissent soit des cercles, soit des rectangles, soit des arcs.

4. Vêtement de la revendication 3, dans lequel la majorité des ouvertures définissent des cercles et dans lequel un diamètre de la majorité des ouvertures est inférieur à 1,5 mm ou inférieur à 1 mm, et éventuellement dans lequel le diamètre de la majorité des ouvertures est d'au moins 0,2 mm, d'au moins 0,4 mm, ou d'au moins 0,6 mm.

5. Vêtement de la revendication 1, dans lequel soit a), soit b) s'applique, dans lequel :
a) l'élastomère à mémoire de forme durci constitue au moins 50 % de la superficie de la couche à motifs ; et
b) l'élastomère à mémoire de forme durci comprend un caoutchouc de silicone durci.

6. Vêtement de la revendication 1, dans lequel soit a), soit b) s'applique, dans lequel :
a) la première couche de tissu et la deuxième couche de tissu comprennent chacune au moins 80 % de coton ; et
b) la première couche de tissu et la deuxième couche de tissu comprennent chacune jusqu'à 20 % d'élasthanne.

7. Vêtement de la revendication 1, le vêtement rétrécissant de moins de 5 %, moins de 4 % ou moins de 3 % entre avant le moulage et après 5 lavages.

8. Vêtement de la revendication 1, le vêtement en étant un parmi :
un vêtement d'une seule pièce,
un vêtement sans coutures,
un soutien-gorge, ou
un soutien-gorge d'une seule pièce.

9. Vêtement de la revendication 1, dans lequel la première couche de tissu et la deuxième couche de tissu sont des tricots.

10. Vêtement de la revendication 1, dans lequel les bords du vêtement ont une coupe nette, et éventuellement soit a), soit b) s'applique, dans lequel :
a) les bords du vêtement sont dentelés, et
b) les bords du vêtement ne sont pas effilochés après 20 cycles de lavage.

11. Vêtement de la revendication 1, la résistance aux oxydes d'azote du vêtement telle que testée par la méthode ISO 105-G01 :1985 après 3 cycles d'exposition à des oxydes d'azote étant ≥ 3/4.

12. Vêtement de la revendication 1, dans lequel l'élastomère à mémoire de forme durci est un caoutchouc de silicone liquide durci qui est éventuellement formé à partir d'un caoutchouc de silicone liquide bicomposant.

13. Procédé de fabrication d'un stratifié de tissu moulé, le procédé comprenant :
la mise en place d'une couche à motifs d'un élastomère à mémoire de forme non durci sur une première couche de tissu (102), la couche à motifs de l'élastomère à mémoire de forme non durci étant une couche continue de l'élastomère à mémoire de forme non durci définissant au moins 24 ouvertures par centimètre carré de la couche à motifs, les ouvertures étant dépourvues de l'élastomère à mémoire de forme non durci, et les ouvertures définissant moins de 50 % de la superficie de la couche à motifs ;
la mise en contact de la couche à motifs de l'élastomère à mémoire de forme non durci avec une deuxième couche de tissu pour produire un sous-ensemble de tissu (104) ;
la mise en contact du sous-ensemble de tissu avec une surface d'un moule chauffé (106) ; et
le moulage du sous-ensemble de tissu pour qu'il épouse la forme du moule, pour durcir ainsi l'élastomère à mémoire de forme non durci pour produire un stratifié de tissu moulé comprenant une couche à motifs d'élastomère à mémoire de forme durci entre la première couche de tissu et la deuxième couche de tissu et faire adhérer la première couche de tissu à la deuxième couche de tissu (108), les première et deuxième couches de tissu comprenant au moins 80 % de fibres naturelles.

14. Procédé de la revendication 13, dans lequel le moule est chauffé jusqu'à une température comprise entre 160 °C et 200 °C, par exemple dans lequel le moule est chauffé jusqu'à une température allant jusqu'à 185 °C.

15. Procédé de la revendication 13, comprenant la découpe du stratifié de tissu moulé pour produire un vêtement ou une partie d'un vêtement (110), et éventuellement dans lequel le vêtement ou la partie du vêtement a des bords finis, par exemple dans lequel les bords finis sont :
a) droits, dentelés, ou une combinaison des deux, ou
b) résistants à l'effilochage.
